# EUROPEAN PATENT APPLICATION

(11) **EP 4 391 447 A1**
(43) Date of publication of application: **26.06.2024**
(21) Application number: 22216181.2
(22) Date of filing: 22.12.2022
(51) Int. Cl.: H04L 9/40, H04L 9/32, H04L 41/16, H04W 12/06, G06N 20/20

(54) **SECURE SHARING OF MACHINE LEARNING MODELS IN COMMUNICATION NETWORKS**

(71) Applicant: Nokia Technologies Oy, 02610 Espoo (FI)
(72) Inventor: AGGARWAL, Chaitanya, Munich (DE); PEINADO GOMEZ, German, Warsaw (PL); GIUST, Fabio, Pullach (DE)
(74) Representative: Nokia EPO representatives

(57) **Abstract**

According to an example aspect of the present invention, there is provided an apparatus comprising means for receiving, from a network function consumer, a request to obtain a machine learning model, verifying that the network function consumer is authorized to obtain the machine learning model and transmitting to an analytical data repository function, after said verification, a request to store information indicating that the network function consumer is authorized to obtain the machine learning model.

## Description

### FIELD

Various example embodiments relate in general to communication networks, such as core networks of cellular communication systems, and more specifically, to secure sharing of machine learning models in such networks.

### BACKGROUND

Security is very important in various communication networks. For example, in core networks of cellular communication systems, such as in 5G core networks developed by the 3rd Generation Partnership Project, 3GPP, it needs to be ensured that Machine Learning, ML, models can be shared in a secure manner. The 3GPP still develops 5G core networks and there is a need to provide enhanced methods, apparatuses and computer programs to ensure secure sharing of ML models in 5G core networks, and in other networks in the future as well.

### SUMMARY

According to some aspects, there is provided the subject-matter of the independent claims. Some example embodiments are defined in the dependent claims.

The scope of protection sought for various example embodiments of the invention is set out by the independent claims. The example embodiments and features, if any, described in this specification that do not fall under the scope of the independent claims are to be interpreted as examples useful for understanding various example embodiments of the invention.

According to a first aspect of the present invention, there is provided an apparatus, comprising means for receiving, from a network function consumer, a request to obtain a machine learning model, verifying that the network function consumer is authorized to obtain the machine learning model and transmitting to an analytical data repository function, after said verification, a request to store information indicating that the network function consumer is authorized to obtain the machine learning model.

Example embodiments of the first aspect may comprise at least one feature from the following bulleted list or any combination of the following features:
- wherein the request to store said information indicating that the network function consumer is authorized to obtain the machine learning model comprises an identifier of the machine learning model;
- wherein the apparatus further comprises means for operating as an ML model training logical function;
- wherein the apparatus further comprises means for receiving from the analytical data repository function, responsive to transmitting a request to store the machine learning model, a uniform resource identifier of the machine learning model, encrypting the uniform resource identifier of the machine learning model using a public key of the network function consumer and transmitting the encrypted uniform resource identifier to the network function consumer;
- wherein the apparatus further comprises means for determining that authorization of the network function consumer to obtain the machine learning model has been changed and transmitting, to the analytical data repository function, a request to change authorization of the network function consumer related to consuming the machine learning model;
- wherein the apparatus further comprises means for determining that authorization of the network function consumer to obtain the machine learning model has changed and transmitting, to the analytical data repository function, a request to delete authorization of the network function consumer to obtain the machine learning model;
- wherein the apparatus further comprises means for determining a change in an interoperability list, wherein the change excludes the network function consumer from the interoperability list, determining, based on the change in the interoperability list, that authorization of the network function consumer to obtain the machine learning model has changed and transmitting, to the analytical data repository function, a request to delete authorization of the network function consumer to obtain the machine learning model;
- wherein the request to delete authorization of the network function consumer to obtain the machine learning model comprises the changed interoperability list;
- wherein the apparatus further comprises means for subscribing to receive a notification from the analytical data repository function when the network function consumer or another network function consumer requests the machine learning model.

According to a second aspect of the present invention, there is provided an apparatus, comprising means for receiving, from a machine training logical function, a request to store information indicating that a network function consumer is authorized to obtain a machine learning model and storing said information indicating that the network function consumer is authorized to obtain a machine learning model.

Example embodiments of the second aspect may comprise at least one feature from the following bulleted list or any combination of the following features:
- wherein the apparatus further comprises means for operating as an analytical data repository function;
- wherein the apparatus further comprises means for receiving, from the machine training logical function, a request to delete authorization of the network function consumer to obtain the machine learning model and deleting authorization of the network function consumer to obtain the machine learning model.

According to a third aspect of the present invention, there is provided a first method comprising receiving by an apparatus, from a network function consumer, a request to obtain a machine learning model, verifying by the apparatus that the network function consumer is authorized to obtain the machine learning model and transmitting to an analytical data repository function by the apparatus, after said verification, a request to store information indicating that the network function consumer is authorized to obtain the machine learning model.

According to a fourth aspect of the present invention, there is provided a second method comprising receiving by an apparatus, from a machine training logical function, a request to store information indicating that a network function consumer is authorized to obtain a machine learning model and storing by the apparatus said information indicating that the network function consumer is authorized to obtain a machine learning model.

According to a fifth aspect of the present invention, there is provided an apparatus, comprising one or more processors, and memory storing instructions that, when executed by the one or more processors, cause the apparatus to perform, receive, from a network function consumer, a request to obtain a machine learning model, verify that the network function consumer is authorized to obtain the machine learning model and transmit to an analytical data repository function, after said verification, a request to store information indicating that the network function consumer is authorized to obtain the machine learning model.

According to a sixth aspect of the present invention, there is provided an apparatus, comprising one or more processors, and memory storing instructions that, when executed by the one or more processors, cause the apparatus to perform receive, from a machine training logical function, a request to store information indicating that a network function consumer is authorized to obtain a machine learning model and store said information indicating that the network function consumer is authorized to obtain a machine learning model.

According to a seventh aspect of the present invention, there is provided a non-transitory computer readable medium having stored thereon a set of computer readable instructions that, when executed by at least one processor, cause an apparatus to at least perform the first or the second method. According to an eighth aspect of the present invention, there is provided a computer program comprising instructions which, when the program is executed by an apparatus, cause the apparatus to carry out the first or the second method.

### BRIEF DESCRIPTION OF THE DRAWINGS

FIGURE 1 illustrates an example of a communication system in accordance with at least some example embodiments;
FIGURE 2 illustrates a signalling graph in accordance with at least some example embodiments;
FIGURE 3 illustrates an example apparatus capable of supporting at least some example embodiments;
FIGURE 4 illustrates a flow graph of a first method in accordance with at least some example embodiments.

### EXAMPLE EMBODIMENTS

Security may be enhanced by the procedures described herein for example in communication networks, such as in 5G core networks or other core networks. More specifically, secure sharing of Machine Learning, ML, models may be achieved by using a Model Training Logical Function, MTLF, in general the ML model producer/owner, to verify a request of a Network Function consumer, NFc, to obtain an ML model. After successful verification, the MTLF may then inform an Analytical Data Repository Function, ADRF, about the authorization of the NFc to obtain the ML model, so that the ADRF may provide access to the ML model for the authorized NFcs and decline access to the ML model for non-authorized NFcs. Therefore, ML models may be shared in a secure manner.

In some example embodiments, the MTLF may also inform the ADRF when the authorization of the NFc to obtain the ML model has changed, e.g., revoked. In such a case the ADRF may delete the authorization of the NFc, thereby further enhancing secure sharing of ML models.

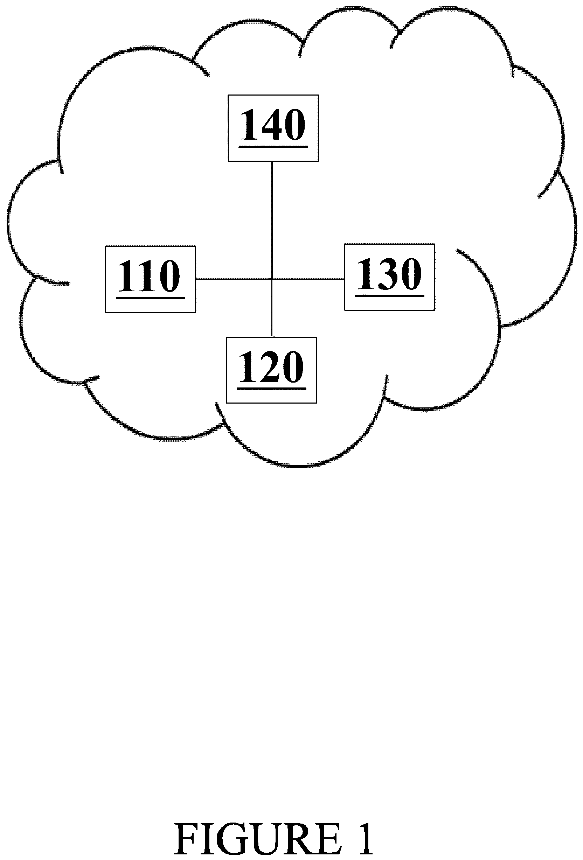

FIGURE 1 illustrates an example of a communication system in accordance with at least some embodiments. In FIGURE 1, NFc 110, ADRF 120, Network Repository Function, NRF, 130, and MTLF 140 are shown. NFc 110, ADRF 120, NRF 130 and MTLF 140 may be Network Functions, NFs, that refer to an operational and/or a physical entity. An NF may be a specific network node or element, or a specific function or set of functions carried out by one or more entities, such as Virtual Network Functions, VNFs. One physical apparatus may be configured to perform tasks of one or multiple NFs. NFc 110, ADRF 120, NRF 130 and MTLF 140 may be configured to, or comprise means for, operating according to at least one standard specified by the 3rd Generation Partnership Project, 3GPP, in a Service-Based Architecture, SBA, for example.

At least some example embodiments of the present disclosure may be applied in containerized deployments as well. One physical node may be configured to perform plural NFs. Examples of such network functions include a (radio) access or resource control or management function, session management or control function, interworking, data management or storage function, authentication function or a combination of one or more of these functions.

In some example embodiments, NFc 110 may be a Network Data Analysis Function, NWDAF. For example, NFc 110 may be an Analytics Logical Function, AnLF. Alternatively, or in addition, an NWDAF may comprise MTLF 140 and/or AnLF, or be associated with MTLF 140 and/or AnLF.

In some example embodiments, service definitions of ADRF 120 may be enhanced such that MTLF 140 may get a context of ADRF 120 for an authorized NF, like NFc 110, related to a ML model that NFc 110 may be authorized to obtain. In some example embodiments, service definitions of ADRF 120 may be enhanced such that MTLF 140 may update a context of ADRF 120 for an authorized NF, like NFc 110, related to a ML model that NFc 110 may be authorized to obtain. In some example embodiments, a mechanism may be provided to enable the extension of authorization of NFc 110 to obtain the ML model. For example, if NFc 110 is authorized to obtain the ML model in particular time interval, the authorization can be refreshed in order to extend the time interval. In some example embodiments, a mechanism may be provided to enable revocation of authorization of NFc 110 to obtain the ML model. For example, if NFc 110 belongs to a particular vendor and the vendor is no longer authorized to obtain the ML model, NFc 110 should not be able to retrieve the ML model, even if NFc 110 would have a valid Uniform Resource Identifier, URI, for the ML model. The vendor of NFc 110 may not be authorized to obtain the ML model, e.g., due to changes in Service Level Agreements, SLAs, between vendors.

The ML model may be regarded as a high valuable asset for an owner of the ML model, like MTLF 140, and there is a need to enhance security mechanisms to protect the ML model availability, confidentiality and integrity when the ML model is shared with NF consumers. More specifically, example embodiments of the present disclosure address at least the following issues:
- Lack of authorization granularity may be an issue at ML model level in ADRF 120. If ADRF 120 is not able to verify that a particular NFc, like NFc 110, is authorized to retrieve a particular ML model, security would be compromised. Therefore, in some example embodiments, a request to store information indicating that NFc 110 is authorized to obtain the ML model may be transmitted from MTLF 140 to ADRF 120.
- Another issue may be that if the authorization of NFc 110, like an AnLF, by MTLF would not be updated at ADRF 120, NFc 110 could retrieve the ML model even when permissions have expired or removed at SLA level. Therefore, in some example embodiments, a request to change authorization of NFc 110 related to consuming the ML model may be transmitted from MTLF 140 to ADRF 120. For example, if an interoperability indication of MTLF 140 has removed NFc 110 belonging to Vendor 'A' from an interoperability list, NFc 110 may still have a valid URI to retrieve the ML model. In such a case, MTLF 140 may transmit, to ADRF 120, a request to delete authorization of NFc 110 to obtain the ML model, to prevent NFc 110 to download the ML model. Similarly, if NFc 110 is found to be malicious, MTLF 140 may receive a notification about revocation of authorization of NFc 110 to obtain the ML model and transmit a request to delete authorization of NFc 110 to obtain the ML model, in order to block NFc 110 from accessing the ML model.
- Yet another issue may that if there is no mechanism or defined procedure to notify MTLF 140 about which NF consumer is requesting a certain ML model from ADRF 120, MTLF 140 would not be able to track what NF consumers have actually obtained the ML model, including fraudulent NF consumers that hold the ML model's URI illegitimately, or NF consumers which hold the URI legitimately but are misconfigured in the authorization list. Therefore, in some example embodiments, MTLF 140 may subscribe to receive a notification from ADRF when any NF requests the ML model.

Service of ADRF 120 may be thus enhanced to allow MTLF 140 to update more granular information regarding the authorized NFc, like NFc 110. Said granular information may comprise information indicating that NFc 110 is authorized to obtain the ML model. In some example embodiments, said granular information may comprise a model identifier of the ML model, wherein the ML model may be a model that NFc 110 has been allowed, i.e., authorized by MTLF 140, to obtain. The model identifier may be for example a standalone identifier or a part of the URI.

In some example embodiments, the URI of the ML model may be encrypted by MTLF 140 using a public key of NFc 110 and after that transmitted from MTLF 140 to NFc 110. Such a secured transmission may be exploited to prevent any leakage of the URI, thereby further preventing potential attacks on ADRF 120 and/or the ML model, and consequently enhancing secure sharing of ML models.

In some example embodiments, if the authorization to obtain the ML model has been revoked from NFc 110, MTLF may transmit to ADRF 140 a request to change authorization of NFc 110 related to consuming the ML model. The request to change authorization may be a request to delete the authorization and transmitted, e.g., if any change occurs in the interoperability indicator list of MTLF 140 or an access token of NFc 110 has been revoked, for example when NFc 110 is suspected to be malicious.

In some example embodiments, MTLF 140 may create a database, the database comprising information about the authorized NFc, like NFc 110, vendor identity of the authorized NFc, analytics identity and model identifier of the ML model for that NFc 110 is authorized to obtain.

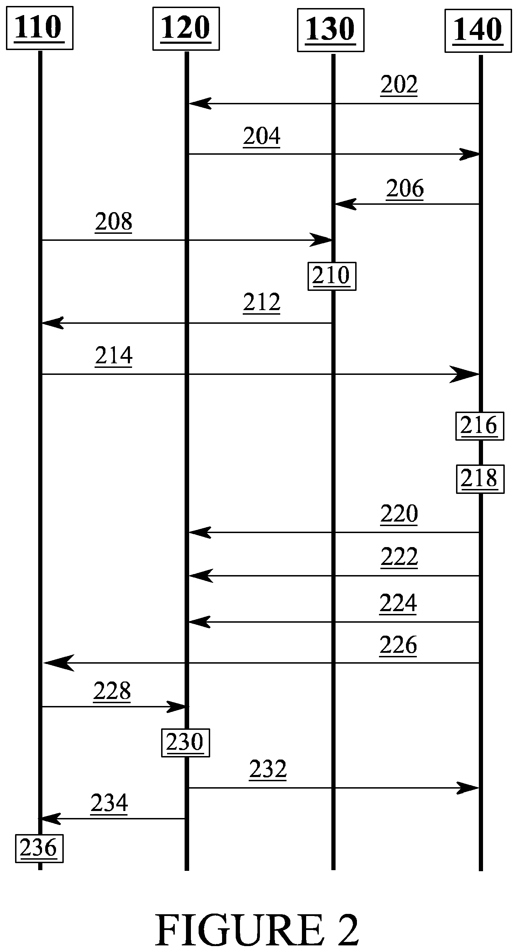

FIGURE 2 illustrates a signalling graph in accordance with at least some example embodiments. On the vertical axes are disposed, from the left to the right NFc 110, ADRF 120, NRF 130 and MTLF 140 of FIGURE 1. Time advances from the top towards the bottom.

At step 202, MTLF 140 may transmit to ADRF 120 a request to store an ML model. In some example embodiments the request may be for an encrypted model, i.e., MTFL 140 may request ADRF 120 to store an encrypted version of the ML model. Responsive to the request to store the ML model, ADRF 120 may transmit, at step 204, a response along with a resource identifier, such as a URI, of the stored ML model.

At step 206, MTLF 140 may register its own NF profile . The NF profile may comprise at least one of an analytics identity, allowed NF type, NF identity or interoperability indicator. At step 208, NFc 110 may transmit an access token request to NRF 130 in order to get access to the services for the ML model retrieval. The access token request may comprise for example one or a plurality of analytics identifiers which the NFc 110 is interested in and/or a vendor identity of NFc 110.

At step 210, NRF 130 may use the information present in the access token request and verify that NFc 110 may receive one or multiple ML model(s) of the NFp associated to the requested Analytics identifiers After successful verification, at step 212, NRF 130 may transmit an access token, OK Token (claim: Analytics Id, Vendor Id), to NFc 110. At step 214, NFc 110 may transmit a request to MTLF 140, to request to obtain the ML model. That is, NFc 110 may request an authorization from MTLF to consume, i.e., to access and use, the ML model stored at ADRF 120. The request may be a service request. The request may for example comprise the access token and at least one of a vendor identity of NFc 110, an analytics identity of NFc 110 or Client Credentials Assertion, CCA.

At step 216, MTLF 140 may verify the access token. That is, MTLF 140 may verify that NFc 110 is authorized to obtain the ML model. After successful verification, MTLF 140 may transmit to ADRF 120 a request to store information indicating that NFc 110 is authorized to obtain the ML model. That is, MTLF 140 may request ADRF 120 to update details of NFc 110, comprising NF Instance identity of NFc 110. The request to store said information indicating that NFc 110 is authorized to obtain the ML model may comprise an identifier of the ML model.

At step 218, MTLF 140 may update information of NFc 110 to include the identifier of the ML model. For instance, MTLF 140 may update information of NFc 110 with either an URI of the ML model or a generated model identifier corresponding to the URI of the ML model. MTLF 140 may also store said information of NFc 110, like an authorized NF, possibly along with at least one of the vendor identity of NFc 110, requested analytics identifiers or the identifier of the ML model for the requested analytics identifier.

In some example embodiments, MTLF 140 may create a database, or a repository, which comprises NF service consumer details of NFc 110 for authorization. The NF service consumer details of NFc 110 may comprise, e.g., for authorized NF consumers, the URI of the ML model generated by ADRF 120, as received at step 204. The URI of the ML model may be used to access the ML model. Alternatively, or in addition, the NF service consumer details of NFc 110 may comprise for authorized NF consumers the model identifier of the ML model generated by MTLF 140 corresponding to the URI of the ML model, the analytics identity for which NFc 110 is authorized, the vendor identity of NFc 110, and an interoperability list of MTLF 140.

After successful verification, at step 216, MTLF 140 may transmit, at step 220, to ADRF 120 a request to store information indicating that NFc 110 is authorized to obtain the ML model. That is, MTLF 140 may update details of NFc 110 at step 216. The details may comprise for example an instance identity corresponding to the identifier of the ML Model requested along with the URI of the ML model or the model identifier of the ML model generated by MTLF 140 corresponding to the URI of the ML model.

MTLF 140 may thus update the details of an authorized NFc, like NFc 110, with respect to a particular ML model at ADRF 120. The identification of the ML model may be done using the URI of the ML model or the model identifier of the ML model generated by MTLF 140 corresponding to the URI of the ML model. The model identifier generated by MTLF 140 may be considered as a standalone identifier. Alternatively, or in addition, MTLF 140 may transmit to ADRF 120 an interoperability list of the approved vendors, wherein the list may comprise a vendor of NFc 110 when NFc 110 is authorized to obtain the ML model.

At some point, MTLF 140 may determine that authorization of NFc 110 to obtain the ML model has changed and transmit, at step 222, to ADRF 120, a request to change authorization of NFc 110 related to consuming the ML model. For instance, in the case of a change in the interoperability list or revocation of the access token of NFc 110, MTLF 140 transmit the request to change authorization of NFc 110. The request to change authorization of NFc 110 may be a modification request. In some example embodiments, the request to change may be a request to delete authorization of NFc 110 to obtain the ML model, i.e., a request to delete the details of NFc 110.

MTLF 140 may determine the change and transmit the request to change authorization of NFc 110 in case of change a in the interoperability list, a revocation of the access token of NFc 110 or any other reason by which the authorization rule has changed for NFc. MTLF 140 may for example receive a notification about revocation of authorization of NFc 110 to obtain the ML model and determine, based on the notification, that authorization of NFc 110 to obtain the ML model has been changed. MTLF 140 may then transmit to ADRF 120, responsive to receiving the notification, a request to delete authorization of NFc 110 to obtain the ML model.

In some example embodiments, MTLF 140 may determine a change in the interoperability list, wherein the change excludes the network function consumer from the interoperability list. MTLF 140 may then determine, based on the change in the interoperability list, that authorization of NFc 110 to obtain the ML model has changed, i.e., revoked. After such determination, MTLF 140 may transmit to ADRF 120 the request to delete authorization of NFc 110 to obtain the ML model.

In some example embodiments, MTLF 140 may transmit the request to delete authorization of NFc 110, i.e., the modification request, with an identifier of NFc 110 and delete the details of NFc from its memory. Alternatively, MTLF 140 may transmit the request to delete authorization of NFc 110 with the interoperability list to ADRF 120 and ADRF 120 may determine that NFc 110 is not authorized anymore, if the vendor identity of NFc 110 is not in the changed, updated list received at step 222. ADRF 120 may delete the details of NFc 110 after determining that NFc 110 is not authorized anymore.

At step 224, MTLF 140 may subscribe to a model request notification service provided by ADRF 120. MTLF 140 may subscribe to receive a notification from ADRF 120 when NFc 110 or another NFc requests the ML model. That is, MTLF 140 may subscribe to receive a notification from ADRF 120 when any third party requests the ML model. MTLF may for example transmit a subscribe request in order to get notified whenever there is a request for the ML model access received by ADRF 120. ADRF 120 may respond to the service request by transmitting an acknowledgement response (OK response).

In some example embodiments, in order for the vendor identity of NFc 110 to be more transparent in the system, vendor information about a vendor to which NFc 110 belongs in a NF Transport Layer Security, TLS, client and server certificate profile, for example as defined in 3GPP standard specification TS 33.310 V17.4.0 Clause 6.1.3c. In some example embodiments, the CCA of the NF, for example as defined in 3GPP standard specification, TS 33.501 V17.7.0 Clause 13.3.8, may comprise said vendor information of an NF generating the CCA.

At step 226, MTLF 140 may transmit a service response to NFc 110. The service response may comprise the URI of the ML model. For example, the service response may comprise an encrypted model URI, to be used to retrieve the model, along with encrypted key "K" which may be used to decrypt the ML model. The service response may also comprise the model identifier. The encryption of the URI may be performed using the public key of NFc 110, i.e., the authorized NFc.

At step 228, NFc 110 may transmit a model retrieval request along with user credentials, like CCA, the identifier of the ML model received at step 226 and an access token authorizing NFc 110 to consume services of ADRF 120, in particularly the ML model. If the URI of the ML model is used to as the identifier of the ML model, then only the URI of the ML model may be transmitted. In some example embodiments, the model retrieval request may comprise a vendor identity of NFc 110.

At step 230, ADRF 120 may validate the model retrieval request against data received at step 220 (or step 222 in case of a change in authorization of NFc 110, like revocation) and user credentials. That is, ADRF 120 may verify the model retrieval request against the information updated by MTLF.

At step 232, ADRF 120 may notify MTLF 140 with respect to the model retrieval request along with details of NFc 110 and the identifier of the ML model. The notification may comprise information such as the identity of NFc 110, from where the request was originated, the analytics identity for which NFc 110 has been originally authorized, the vendor identity of NFc 110 and the model identifier of NFc 110.

At step 234, ADRF 120 may transmit the ML model to NFc 110 after successful validation of the model retrieval model. In some example embodiments, the ML model may be encrypted. That is, ADRF 120 may initiate the ML model download at NFc 110.

At step 236, NFc 110 may start using the ML model, i.e., to install and execute the ML model to provide the Analytics services supported by the ML model. In some example embodiments, NFc 110 may perform decryption of the ML model using the key received at step 226.

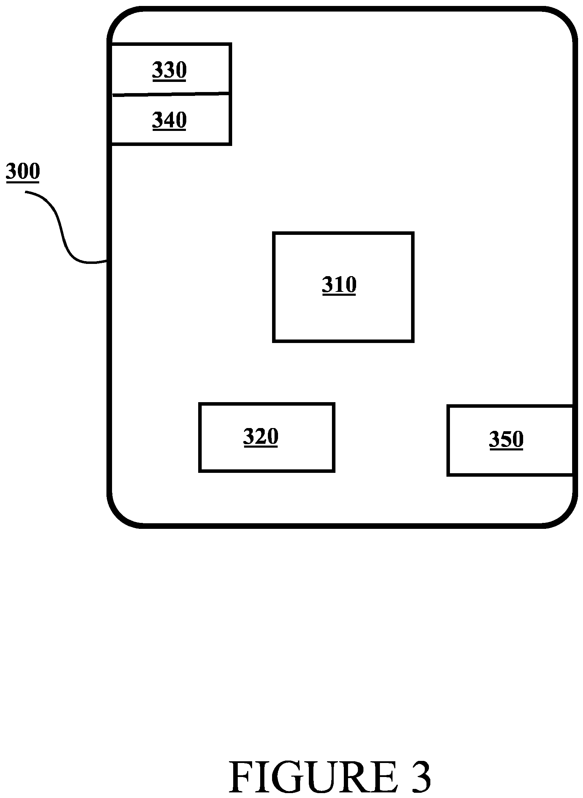

FIGURE 3 illustrates an example apparatus capable of supporting at least some example embodiments. Illustrated is device 300, which may comprise, for example, ADRF 120 or MTLF 140, or a device controlling functioning thereof. Comprised in device 300 is processor 310, which may comprise, for example, a single- or multi-core processor wherein a single-core processor comprises one processing core and a multi-core processor comprises more than one processing core. Processor 310 may comprise, in general, a control device. Processor 310 may comprise more than one processor. Processor 310 may be a control device. Processor 310 may comprise at least one Application-Specific Integrated Circuit, ASIC. Processor 310 may comprise at least one Field-Programmable Gate Array, FPGA. Processor 310 may comprise an Intel Xeon processor for example. Processor 310 may be means for performing method steps in device 300, such as determining, causing transmitting and causing receiving. Processor 310 may be configured, at least in part by computer instructions, to perform actions.

A processor may comprise circuitry, or be constituted as circuitry or circuitries, the circuitry or circuitries being configured to perform phases of methods in accordance with example embodiments described herein. As used in this application, the term "circuitry" may refer to one or more or all of the following: (a) hardware-only circuit implementations, such as implementations in only analog and/or digital circuitry, and (b) combinations of hardware circuits and software, such as, as applicable: (i) a combination of analog and/or digital hardware circuit(s) with software/firmware and (ii) any portions of hardware processor(s) with software (including digital signal processor(s)), software, and memory(ies) that work together to cause an apparatus, such as a network function, to perform various functions) and (c) hardware circuit(s) and or processor(s), such as a microprocessor(s) or a portion of a microprocessor(s), that requires software (e.g., firmware) for operation, but the software may not be present when it is not needed for operation.

This definition of circuitry applies to all uses of this term in this application, including in any claims. As a further example, as used in this application, the term circuitry also covers an implementation of merely a hardware circuit or processor (or multiple processors) or portion of a hardware circuit or processor and its (or their) accompanying software and/or firmware. The term circuitry also covers, for example and if applicable to the particular claim element, a baseband integrated circuit or processor integrated circuit for a mobile device or a similar integrated circuit in server, a cellular network device, or other computing or network device.

Device 300 may comprise memory 320. Memory 320 may comprise Random-Access Memory, RAM, and/or permanent memory. Memory 320 may comprise at least one RAM chip. Memory 320 may comprise solid-state, magnetic, optical and/or holographic memory, for example. Memory 320 may be at least in part accessible to processor 310. Memory 320 may be at least in part comprised in processor 310. Memory 320 may be means for storing information. Memory 320 may comprise computer instructions that processor 310 is configured to execute. When computer instructions configured to cause processor 310 to perform certain actions are stored in memory 320, and device 300 overall is configured to run under the direction of processor 310 using computer instructions from memory 320, processor 310 and/or its at least one processing core may be considered to be configured to perform said certain actions. Memory 320 may be at least in part comprised in processor 310. Memory 320 may be at least in part external to device 300 but accessible to device 300.

Device 300 may comprise a transmitter 330. Device 300 may comprise a receiver 340. Transmitter 330 and receiver 340 may be configured to transmit and receive, respectively, information in accordance with at least one cellular standard, such as a standard defined by the 3GPP. Transmitter 330 may comprise more than one transmitter. Receiver 340 may comprise more than one receiver. Transmitter 330 and/or receiver 340 may be configured to operate in accordance with a suitable communication standard.

Device 300 may comprise User Interface, UI, 350. UI 350 may comprise at least one of a display, a keyboard, a touchscreen, a vibrator arranged to signal to a user by causing device 300 to vibrate, a speaker and a microphone. A user may be able to operate device 300 via UI 350, for example to configure device 300 and/or functions it runs.

Processor 310 may be furnished with a transmitter arranged to output information from processor 310, via electrical leads internal to device 300, to other devices comprised in device 300. Such a transmitter may comprise a serial bus transmitter arranged to, for example, output information via at least one electrical lead to memory 320 for storage therein. Alternatively to a serial bus, the transmitter may comprise a parallel bus transmitter. Likewise processor 310 may comprise a receiver arranged to receive information in processor 310, via electrical leads internal to device 300, from other devices comprised in device 300. Such a receiver may comprise a serial bus receiver arranged to, for example, receive information via at least one electrical lead from receiver 340 for processing in processor 310. Alternatively to a serial bus, the receiver may comprise a parallel bus receiver.

Device 300 may comprise further devices not illustrated in FIGURE 3. In some example embodiments, device 300 may lack at least one device described above. For example, device 300 may not have UI 350.

Processor 310, memory 320, transmitter 330, receiver 340 and/or UI 350 may be interconnected by electrical leads internal to device 300 in a multitude of different ways. For example, each of the aforementioned devices may be separately connected to a master bus internal to device 300, to allow for the devices to exchange information. However, as the skilled person will appreciate, this is only one example and depending on the embodiment various ways of interconnecting at least two of the aforementioned devices may be selected without departing from the scope of the present invention.

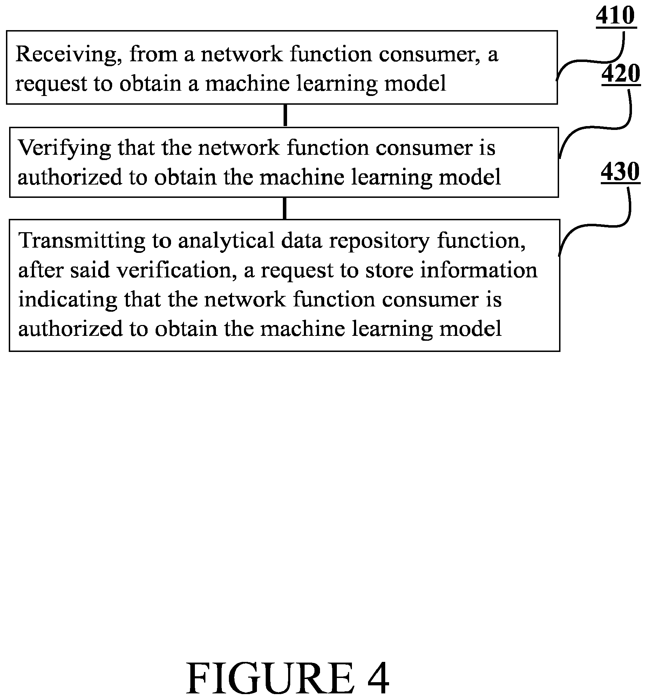

FIGURE 4 is a flow graph of a first method in accordance with at least some example embodiments. The phases of the illustrated first method may be performed by MTLF 140, or by a control device configured to control the functioning thereof, possibly when installed therein.

The first method may comprise, at step 410, receiving, from a network function consumer, a request to obtain a machine learning model. The first method may also comprise, at step 420, verifying that the network function consumer is authorized to obtain the machine learning model. Finally, the first method may comprise, at step 430, transmitting to an analytical data repository function, after said verification, a request to store information indicating that the network function consumer is authorized to obtain the machine learning model.

It is to be understood that the embodiments disclosed are not limited to the particular structures, process steps, or materials disclosed herein, but are extended to equivalents thereof as would be recognized by those ordinarily skilled in the relevant arts. It should also be understood that terminology employed herein is used for the purpose of describing particular example embodiments only and is not intended to be limiting.

Reference throughout this specification to one example embodiment or an example embodiment means that a particular feature, structure, or characteristic described in connection with the example embodiment is included in at least one example embodiment. Thus, appearances of the phrases "in one example embodiment" or "in an example embodiment" in various places throughout this specification are not necessarily all referring to the same example embodiment. Where reference is made to a numerical value using a term such as, for example, about or substantially, the exact numerical value is also disclosed.

As used herein, a plurality of items, structural elements, compositional elements, and/or materials may be presented in a common list for convenience. However, these lists should be construed as though each member of the list is individually identified as a separate and unique member. Thus, no individual member of such list should be construed as a de facto equivalent of any other member of the same list solely based on their presentation in a common group without indications to the contrary. In addition, various example embodiments and examples may be referred to herein along with alternatives for the various components thereof. It is understood that such example embodiments, examples, and alternatives are not to be construed as de facto equivalents of one another, but are to be considered as separate and autonomous representations.

### CLAUSES

1. An apparatus comprising at least one processing core, at least one memory including computer program code, the at least one memory and the computer program code being configured to, with the at least one processing core, cause the apparatus at least to:
   - receiving, from a network function consumer, a request to obtain a machine learning model;
   - verifying that the network function consumer is authorized to obtain the machine learning model; and
   - transmitting to an analytical data repository function, after said verification, a request to store information indicating that the network function consumer is authorized to obtain the machine learning model.
2. An apparatus according to clause 1, wherein the request to store said information indicating that the network function consumer is authorized to obtain the machine learning model comprises an identifier of the machine learning model.
3. An apparatus according to clause 1 or clause 2, wherein the at least one memory and the computer program code are further configured to, with the at least one processing core, cause the apparatus at least to::
   - operate as an ML model training logical function.
4. An apparatus according to any of the preceding clauses, wherein the at least one memory and the computer program code are further configured to, with the at least one processing core, cause the apparatus at least to:
   - receive from the analytical data repository function, responsive to transmitting a request to store the machine learning model, a uniform resource identifier of the machine learning model;
   - encrypt the uniform resource identifier of the machine learning model using a public key of the network function consumer; and
   - transmit the encrypted uniform resource identifier to the network function consumer.
5. An apparatus according to any of the preceding clauses, wherein the at least one memory and the computer program code are further configured to, with the at least one processing core, cause the apparatus at least to:
   - determine that authorization of the network function consumer to obtain the machine learning model has been changed; and
   - transmit, to the analytical data repository function, a request to change authorization of the network function consumer related to consuming the machine learning model.
6. An apparatus according to any of the preceding clauses, wherein the at least one memory and the computer program code are further configured to, with the at least one processing core, cause the apparatus at least to:
   - determine that authorization of the network function consumer to obtain the machine learning model has changed; and
   - transmit, to the analytical data repository function, a request to delete authorization of the network function consumer to obtain the machine learning model.
7. An apparatus according to any of the preceding clauses, wherein the at least one memory and the computer program code are further configured to, with the at least one processing core, cause the apparatus at least to:
   - determine a change in an interoperability list, wherein the change excludes the network function consumer from the interoperability list;
   - determine, based on the change in the interoperability list, that authorization of the network function consumer to obtain the machine learning model has changed; and
   - transmit, to the analytical data repository function, a request to delete authorization of the network function consumer to obtain the machine learning model.
8. An apparatus according to clause 7, wherein the request to delete authorization of the network function consumer to obtain the machine learning model comprises the changed interoperability list.
9. An apparatus according to any of the preceding clauses, wherein the at least one memory and the computer program code are further configured to, with the at least one processing core, cause the apparatus at least to:
   - subscribe to receive a notification from the analytical data repository function when the network function consumer or another network function consumer requests the machine learning model.
10. An apparatus comprising at least one processing core, at least one memory including computer program code, the at least one memory and the computer program code being configured to, with the at least one processing core, cause the apparatus at least to:
   - receive, from a machine training logical function, a request to store information indicating that a network function consumer is authorized to obtain a machine learning model; and
   - store said information indicating that the network function consumer is authorized to obtain a machine learning model.
11. An apparatus according to clause 10, wherein the at least one memory and the computer program code are further configured to, with the at least one processing core, cause the apparatus at least to:
   - operate as an analytical data repository function.
12. An apparatus according to clause 10 or clause 11, wherein the at least one memory and the computer program code are further configured to, with the at least one processing core, cause the apparatus at least to:
   - receive, from the machine training logical function, a request to delete authorization of the network function consumer to obtain the machine learning model; and
   - delete authorization of the network function consumer to obtain the machine learning model.

In an example embodiment, an apparatus, such as, for example, ADRF 120 or MTLF 140, or a device controlling functioning thereof, may comprise means for carrying out the example embodiments described above and any combination thereof.

In an example embodiment, a computer program may be configured to cause a method in accordance with the example embodiments described above and any combination thereof. In an example embodiment, a computer program product, embodied on a non-transitory computer readable medium, may be configured to control a processor to perform a process comprising the example embodiments described above and any combination thereof.

In an example embodiment, an apparatus, such as, for example, ADRF 120 or MTLF 140, or a device controlling functioning thereof, may comprise at least one processor, and at least one memory including computer program code, wherein the at least one memory and the computer program code are configured to, with the at least one processor, cause the apparatus at least to perform the example embodiments described above and any combination thereof.

Furthermore, the described features, structures, or characteristics may be combined in any suitable manner in one or more example embodiments. In the preceding description, numerous specific details are provided, such as examples of lengths, widths, shapes, etc., to provide a thorough understanding of example embodiments of the invention. One skilled in the relevant art will recognize, however, that the invention may be practiced without one or more of the specific details, or with other methods, components, materials, etc. In other instances, well-known structures, materials, or operations are not shown or described in detail to avoid obscuring aspects of the invention.

While the forgoing examples are illustrative of the principles of the example embodiments in one or more particular applications, it will be apparent to those of ordinary skill in the art that numerous modifications in form, usage and details of implementation may be made without the exercise of inventive faculty, and without departing from the principles and concepts of the invention. Accordingly, it is not intended that the invention be limited, except as by the claims set forth below.

The verbs "to comprise" and "to include" are used in this document as open limitations that neither exclude nor require the existence of also un-recited features. The features recited in depending claims are mutually freely combinable unless otherwise explicitly stated. Furthermore, it is to be understood that the use of "a" or "an", that is, a singular form, throughout this document does not exclude a plurality.

As used herein, "at least one of the following: <a list of two or more elements>" and "at least one of <a list of two or more elements>" and similar wording, where the list of two or more elements are joined by "and" or "or", mean at least any one of the elements, or at least any two or more of the elements, or at least all the elements.

### INDUSTRIAL APPLICABILITY

At least some example embodiments find industrial application at least in 5G core networks, wherein it is desirable to enhance security of sharing of ML models, and possibly in other core networks in the future as well, like in 6G networks.

### ACRONYMS LIST

- 3GPP: 3rd Generation Partnership Project
- ADRF: Analytical Data Repository Function
- AnLF: Analytics Logical Function
- ASIC: Application-Specific Integrated Circuit
- CCA: Client Credentials Assertion
- FPGA: Field-Programmable Gate Array
- ML: Machine Learning
- MTLF: Machine Training Logical Function
- NF: Network Function
- NFc: NF consumer
- NRF: Network Repository Function
- NWDAF: Network Data Analysis Function
- RAM: Random-Access Memory
- SBA: Service-Based Architecture
- SLA: Service Level Agreement
- TLS: Transport Layer Security
- UI: User Interface
- URI: Uniform Resource Identifier
- VNF: Virtualized Network Function

**REFERENCE SIGNS LIST**

| | |
|---|---|
| 110 | NFc (e.g., AnLF) |
| 120 | ADRF |
| 130 | NRF |
| 140 | MTLF |
| 210-236 | Steps of the process of FIGURE 2 |
| 300-350 | Structure of the apparatus of FIGURE 3 |
| 410-430 | Phases of the first method in FIGURE 4 |

## Claims

1. An apparatus, comprising means for:
- receiving, from a network function consumer, a request to obtain a machine learning model;
- verifying that the network function consumer is authorized to obtain the machine learning model; and
- transmitting to an analytical data repository function, after said verification, a request to store information indicating that the network function consumer is authorized to obtain the machine learning model.

2. An apparatus according to claim 1, wherein the request to store said information indicating that the network function consumer is authorized to obtain the machine learning model comprises an identifier of the machine learning model.

3. An apparatus according to claim 1 or claim 2, wherein the apparatus further comprises means for:
- operating as an ML model training logical function.

4. An apparatus according to any of the preceding claims, further comprising means for:
- receiving from the analytical data repository function, responsive to transmitting a request to store the machine learning model, a uniform resource identifier of the machine learning model;
- encrypting the uniform resource identifier of the machine learning model using a public key of the network function consumer; and
- transmitting the encrypted uniform resource identifier to the network function consumer.

5. An apparatus according to any of the preceding claims, further comprising means for:
- determining that authorization of the network function consumer to obtain the machine learning model has been changed; and
- transmitting, to the analytical data repository function, a request to change authorization of the network function consumer related to consuming the machine learning model.

6. An apparatus according to any of the preceding claims, further comprising means for:
- determining that authorization of the network function consumer to obtain the machine learning model has changed; and
- transmitting, to the analytical data repository function, a request to delete authorization of the network function consumer to obtain the machine learning model.

7. An apparatus according to any of the preceding claims, further comprising means for:
- determining a change in an interoperability list, wherein the change excludes the network function consumer from the interoperability list;
- determining, based on the change in the interoperability list, that authorization of the network function consumer to obtain the machine learning model has changed; and
- transmitting, to the analytical data repository function, a request to delete authorization of the network function consumer to obtain the machine learning model.

8. An apparatus according to claim 7, wherein the request to delete authorization of the network function consumer to obtain the machine learning model comprises the changed interoperability list.

9. An apparatus according to any of the preceding claims, further comprising means for:
- subscribing to receive a notification from the analytical data repository function when the network function consumer or another network function consumer requests the machine learning model.

10. An apparatus, comprising means for:
- receiving, from a machine training logical function, a request to store information indicating that a network function consumer is authorized to obtain a machine learning model; and
- storing said information indicating that the network function consumer is authorized to obtain a machine learning model.

11. An apparatus according to claim 10, wherein the apparatus further comprises means for:
- operating as an analytical data repository function.

12. An apparatus according to claim 10 or claim 11, further comprising means for:
- receiving, from the machine training logical function, a request to delete authorization of the network function consumer to obtain the machine learning model; and
- deleting authorization of the network function consumer to obtain the machine learning model.

13. A method, comprising:
- receiving by an apparatus, from a network function consumer, a request to obtain a machine learning model;
- verifying by the apparatus that the network function consumer is authorized to obtain the machine learning model; and
- transmitting to an analytical data repository function by the apparatus, after said verification, a request to store information indicating that the network function consumer is authorized to obtain the machine learning model.

14. A method, comprising:
- receiving by an apparatus, from a machine training logical function, a request to store information indicating that a network function consumer is authorized to obtain a machine learning model; and
- storing by the apparatus said information indicating that the network function consumer is authorized to obtain a machine learning model.

15. A computer program comprising instructions which, when executed by an apparatus, cause the apparatus to carry out a method according to claim 13 or claim 14.
